# FASCICULE DE BREVET EUROPEEN

(11) **EP 1 625 972 B1**
(45) Date de publication et mention de la délivrance du brevet: **02.05.2007**
(21) Numéro de dépôt: 05107269.2
(22) Date de dépôt: 08.08.2005
(51) Int. Cl.: B60R 5/04

(54) **Tablette arrière à store à enrouleur pour véhicule automobile.**
Heckplatte mit Rollo für Kraftfahrzeug
Rear parcel shelf with roller blind for vehicles

(30) Priorité: 09.08.2004 FR 0408762
(43) Date de publication de la demande: 15.02.2006
(73) Titulaire: WAGON SAS, 79302 Bressuire Cédex (FR)
(72) Inventeur: Seiller, Julien, 79300, BRESSUIRE (FR)
(74) Mandataire: Bioret, Ludovic

(56) Documents cités:
- EP-A- 0 223 659
- EP-A- 0 861 755
- DE-A1- 10 260 034
- DE-A1- 19 906 648
- DE-U1- 20 122 091
- FR-A- 2 598 994
- FR-A- 2 686 301
- GB-A- 2 306 145
- US-A- 5 669 537

## Description

Le domaine de l'invention est celui des véhicules automobiles, et plus précisément des tablettes arrière équipant certains véhicules automobiles.

De nombreux véhicules, et notamment ceux présentant des hayons arrière, sont équipés d'une tablette arrière, destinée à recouvrir l'espace de rangement des bagages, ou coffre, défini par le hayon arrière, les bords latéraux du véhicule et le dossier des sièges arrière du véhicule.

Ces tablettes arrière permettent de cacher les objets présents dans le coffre, et d'améliorer l'esthétique intérieure du véhicule. Elles permettent également la réception de certains objets peu lourds, tels que des vêtements.

Elles sont en général amovibles, pour permettre un chargement plus important du coffre. Elles sont de plus articulées, pour faciliter l'accès à l'intérieur du coffre. Pour cela, elles peuvent être montées mobiles en rotation. L'axe de rotation est proche du dossier des sièges arrière, et une liaison avec le hayon, par exemple par l'intermédiaire de liens, assure le basculement vers le haut de la tablette, simultanément à l'ouverture du hayon. La tablette reprend sa place automatiquement, en position horizontale, à la fermeture du hayon.

Une telle tablette est décrite dans EP 0861759 A, selon le préambule de la revendication 1.

Cette technique connue est relativement efficace, mais présente certains inconvénients. Tout d'abord le basculement de la tablette lors de l'ouverture du hayon propulse généralement sur la banquette arrière les objets posés sur la tablette ou, à tout le moins, les déplace, les tasse contre le siège...

Par ailleurs, elle suppose un basculement systématique de la tablette, alors que, dans certains cas, l'utilisateur peut ouvrir le hayon sans pour autant vouloir libérer l'espace du coffre (par exemple parce qu'il ne souhaite pas que l'on voit ce qu'il y a à l'intérieur). Il peut également ouvrir le hayon pour prendre un objet poser sur le hayon. Il n'est alors pas souhaitable que l'accès soit restreint (puisque la tablette bascule), ni que l'objet se déplace vers l'intérieur du véhicule (et donc s'éloigne de l'utilisateur).

Par ailleurs, il existe des véhicules dont la vitre arrière peut s'ouvrir, par coulissement ou par basculement, indépendamment du hayon. Dans ce cas, lorsque le hayon est fermé mais la vitre ouverte, il est possible d'accéder à un objet posé sur la tablette, mais non à l'intérieur du coffre. En effet, la tablette reste dans sa position horizontale, puisque le hayon n'est pas ouvert.

Il serait pourtant souhaitable de pouvoir, dans certains cas, atteindre l'intérieur du coffre par cette vitre ouverte. Il n'est cependant pas possible de lier le basculement de la tablette à l'ouverture de la vitre, ne serait-ce que parce que, dans certains cas, il est au contraire souhaitable que la tablette reste en position horizontale.

Un autre inconvénient des tablettes connues est que, lorsqu'on doit transporter un objet encombrant, il est nécessaire de retirer (ou replier) complètement la tablette. Pourtant, dans certaines situations, il est souhaitable de pouvoir transporter un objet encombrant tout en dissimulant le reste de l'intérieur du coffre, et/ou en conservant la fonction de support d'objets de la tablette.

L'invention a notamment pour objectif de pallier ces inconvénients de l'art antérieur.

Plus précisément, un objectif de l'invention est de fournir une tablette arrière présentant une modularité supérieure à celle des tablettes connues, et permettant notamment d'accéder plus facilement et plus efficacement à l'intérieur du coffre, de façon sélective et non systématique.

Un autre objectif de l'invention est de fournir une telle tablette arrière, permettant un accès à l'intérieur du coffre sans ouverture du hayon, par exemple lorsque seule la vitre arrière est ouverte, ou par l'intérieur du véhicule.

L'invention a également pour objectif de fournir une telle tablette arrière, qui permette l'accès à l'intérieur du coffre sans renverser ou mélanger des objets placés sur la tablette.

Encore un autre objectif de l'invention est de fournir une telle tablette arrière, qui soit simple et peu coûteuse à fabriquer et à monter dans le véhicule, et (au moins dans certains modes de réalisation) qui ne nécessite pas de moyens électriques ou de motorisation.

Ces objectifs, ainsi que d'autres qui apparaîtront plus clairement par la suite, sont atteints selon l'invention à l'aide d'une tablette arrière pour véhicule automobile, présentant une surface plane mobile et/ou amovible, pouvant venir recouvrir une zone de coffre à l'arrière dudit véhicule, ladite tablette comprenant au moins un store à enrouleur présentant une toile souple susceptible d'être déployée dans le plan de ladite tablette, pour recouvrir une ouverture ménagée dans un élément rigide et plan de ladite tablette, et d'être repliée pour permettre un accès audit coffre sans déplacer ladite tablette.

Ainsi, il est possible d'atteindre l'intérieur du coffre sans soulever l'intégralité de la tablette. Cela est notamment pratique lorsque seule la vitre d'un hayon est levée. Cette approche permet également de faire dépasser un objet de taille importante, sans que l'on soit obliger d'ôter toute la tablette.

Selon un mode de réalisation avantageux, ledit élément rigide présente sensiblement une forme de U, l'espace intérieur dudit U pouvant être fermé par ledit store et la partie supérieure dudit U correspondant à la zone de ladite tablette venant en contact avec une vitre arrière ou un hayon dudit véhicule.

Préférentiellement, ledit élément rigide porte des rails de guidage d'une barre de tirage de ladite toile. Ces rails de guidage peuvent notamment être formés dans la masse dudit élément rigide.

De façon avantageuse, ladite ouverture correspond à une surface d'au moins 80 % de la surface de ladite tablette. Des dimensions inférieures sont bien sûr possibles. On peut également prévoir plusieurs stores sur la tablette.

Avantageusement, ladite ouverture s'étend sensiblement sur une moitié de la largeur de ladite tablette, correspondant à l'arrière dudit véhicule, et sur une moitié de la longueur de ladite tablette, en position centrée.

L'invention concerne également les véhicules automobiles équipés d'une tablette telle que décrite ci-dessus.

Avantageusement, un tel véhicule comprend un hayon arrière une vitre de custode mobile indépendamment dudit hayon arrière, et ledit store permet l'accès au coffre du véhicule, lorsque ladite vitre de custode est ouverte.

D'autres caractéristiques et avantages de l'invention apparaîtront plus clairement à la lecture de la description suivante d'un mode de réalisation préférentiel de l'invention, donnée à titre de simple exemple illustratif et non limitatif, et des dessins annexés, parmi lesquels :
- la figure 1 présente l'arrière d'un véhicule automobile équipé d'une tablette arrière selon l'invention ;
- les figures 2A et 2B illustrent la tablette arrière du véhicule de la figure 1, avec le store respectivement en position ouverte et en position fermée ;
- les figures 3A et 3B illustrent un autre mode de réalisation d'une tablette arrière selon l'invention, avec le store respectivement en position ouverte et en position fermée.

L'invention propose donc une nouvelle approche des tablettes arrière, dont une portion (ou le cas échéant plusieurs) est ouverte, et obturable sélectivement à l'aide d'un store à enrouleur. Ainsi, la tablette n'est pas formée d'un unique élément plan et rigide, mais présente au contraire une découpe sur sa surface, qui permet d'accéder à l'intérieur du coffre sans ôter ni déplacer l'intégralité de la tablette.

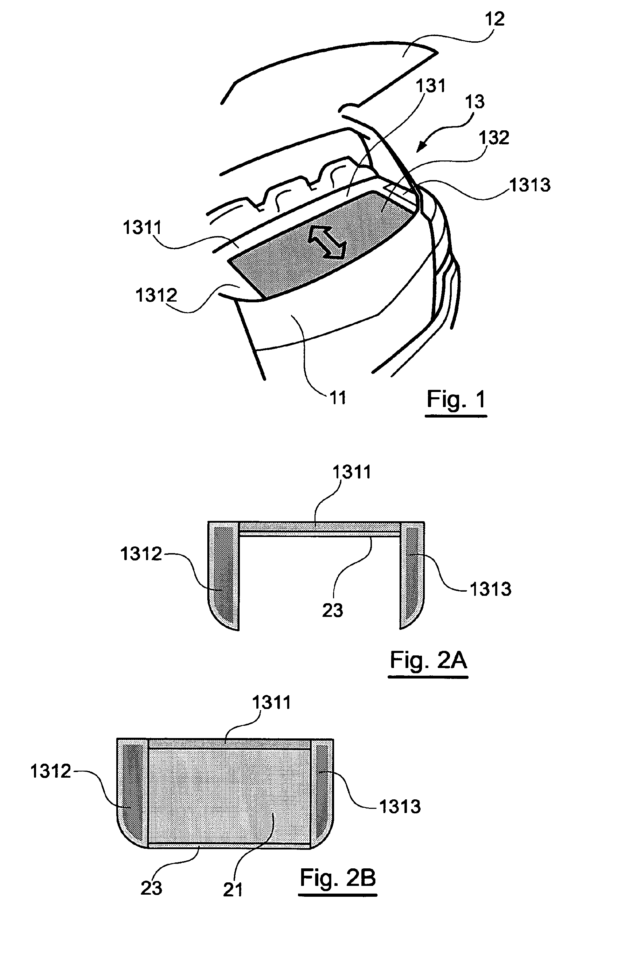

L'invention est notamment bien adaptée aux véhicules présentant un hayon et une vitre arrière pouvant être ouverte indépendamment du hayon, tel qu'illustré par la figure 1.

Ce véhicule est équipé d'un hayon 11, ici en position fermée, et d'une vitre arrière 12, représentée en position ouverte. On comprend que, dans ce genre de situation, les tablettes classiques ne permettent pas d'accéder à l'intérieur du coffre (c'est-à-dire de l'espace s'étendant sous la tablette). En effet, la tablette reste horizontale tant que le hayon n'est pas ouvert.

Selon l'invention en revanche, la tablette 13 présente deux parties, ou portions. Une partie rigide 131, et une partie souple, 132, formée par un store à enrouleur (en position fermée).

La portion rigide 131 définit une forme générale de « U », dont la base 1311 suit le dossier des sièges arrière du véhicule, et dont les branches parallèles 1312, 1313 suivent les bords latéraux du véhicule.

Cette forme de « U » apparaît plus clairement sur la figure 2A.

La tablette 13 porte donc un store à enrouleur, dont la toile 21 peut venir fermer (figure 2B) l'espace intérieur du « U ». Le tube enrouleur du store est monté sous la base 1311 du « U ». Des rails, ou des glissières, peuvent être prévus sur l'intérieur des bords latéraux 1312, 1313, pour guider la barre de tirage 23, et le cas échéant des baleines de renfort de la toile.

Les bords latéraux 1312, 1313 sont avantageusement suffisamment larges pour permettre de poser des objets.

Lorsque le store est en position ouverte (figure 2A), il est possible d'accéder à l'intérieur du coffre, sans déplacer le reste de la tablette. Ainsi, lorsque l'on ouvre la vitre 11 (figure 1), on peut prendre ou placer un objet dans le coffre, sans ouvrir le hayon 12. Cette approche permet également de laisser dépasser un objet, par l'ouverture du « U », sans retirer ou replier intégralement la tablette.

La toile 21 est réalisée dans tout matériau souple adéquat. Elle est préférentiellement choisie de façon à s'accorder avec l'intérieur du véhicule, et notamment la partie rigide de la tablette.

L'actionnement du store peut être manuel. Dans ce cas, des moyens de rappel tendent la toile et la ramènent en position repliée (figure 2A), lorsque la barre de tirage n'est pas maintenue (par des moyens d'accrochage non représentés) dans la position déployée (figure 2B). L'actionnement peut également être motorisée.

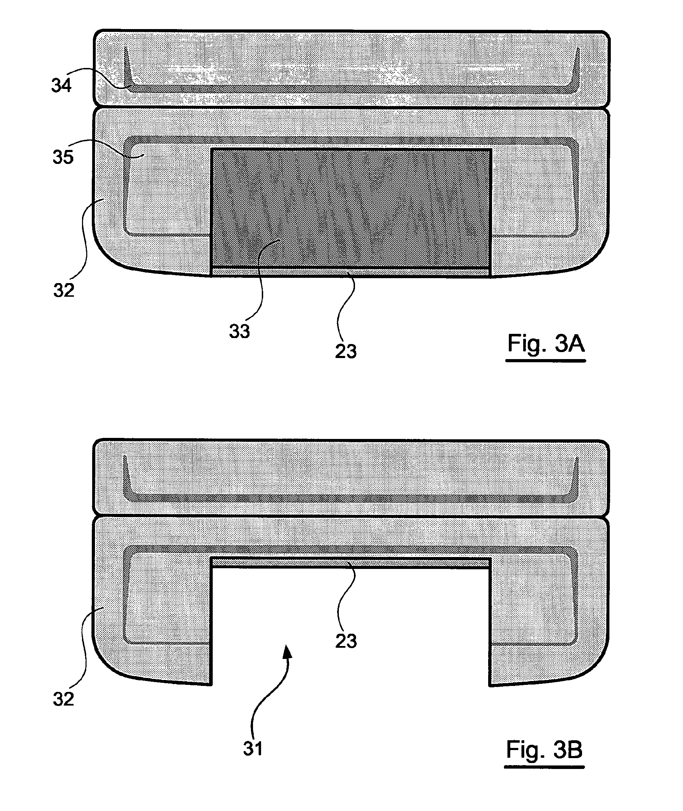

Les figures 3A et 3B illustrent un autre mode de réalisation de l'invention, selon lequel l'ouverture 31 ménagée dans la tablette 32 est de taille plus réduite. Cela permet d'augmenter la surface de support d'objets restant disponible, même lorsque la toile de store 33 est repliée. En revanche, bien sûr, la zone d'accès à l'intérieur du coffre est réduite.

La surface utile de la tablette peut être adaptée aux besoins, et tenir compte d'aspects ergonomiques ou esthétiques. Par exemple, on peut prévoir des zones en creux 34, 35, permettant de mieux maintenir des petits objets. On peut également prévoir de renforcer la tablette, si nécessaire.

La tablette 33 peut par exemple être obtenue par moulage, ce qui permet de réaliser en une seule opération les différentes formes 34, 35, ainsi que les éléments fonctionnels tels que les rails de guidage de la barre de tirage, le logement de la toile en position repliée, ou des moyens de réception d'une cassette de store...

Selon un autre mode de réalisation, on peut prévoir deux stores voisins, permettant d'accéder sélectivement à la partie gauche ou à la partie droite du coffre. Dans ce cas, avantageusement, la tablette a une forme générale en W, ave une barre centrale de renfort et de guidage des deux stores.

Dans certains cas, les tablettes portent des stores à enrouleur pour isoler l'intérieur du véhicule de la chaleur et de la lumière pouvant pénétrer par la vitre arrière. L'invention n'est bien sûr pas incompatible avec cette technique. La tablette porte alors deux stores distincts (dans leurs fonctions, leurs formes et éventuellement leurs matériaux). Le cas échéant, ils peuvent être regroupés dans une même cassette, pour faciliter le montage.

## Revendications

1. Tablette arrière pour véhicule automobile, présentant une surface plane mobile et/ou amovible, pouvant venir recouvrir une zone de coffre à l'arrière dudit véhicule,
**caractérisée en ce qu**'elle comprend au moins un store à enrouleur présentant une toile souple (21 ; 33) susceptible d'être déployée dans le plan de ladite tablette, pour recouvrir une ouverture (31) ménagée dans un élément rigide et plan (13 ; 32) de ladite tablette, et d'être repliée pour permettre un accès audit coffre sans déplacer ladite tablette.

2. Tablette arrière selon la revendication 1, **caractérisée en ce que** ledit élément rigide (13 ; 32) présente sensiblement une forme de U, l'espace intérieur dudit U pouvant être fermé par ledit store (21 ; 33) et la partie supérieure dudit U correspondant à la zone de ladite tablette venant en contact avec une vitre arrière ou un hayon dudit véhicule.

3. Tablette arrière selon l'une quelconque des revendications 1 et 2, **caractérisée en ce que** ledit élément rigide (13 ; 32) porte des rails de guidage d'une barre de tirage de ladite toile.

4. Tablette arrière selon la revendication 3, **caractérisée en ce que** lesdits rails de guidage sont formés dans la masse dudit élément rigide (13 ; 32).

5. Tablette arrière selon l'une quelconque des revendications 1 à 4, **caractérisée en ce que** ladite ouverture (31) correspond à une surface d'au moins 80 % de la surface de ladite tablette.

6. Tablette arrière selon l'une quelconque des revendications 1 à 4, **caractérisée en ce que** ladite ouverture (31) s'étend sensiblement sur une moitié de la largeur de ladite tablette, correspondant à l'arrière dudit véhicule, et sur une moitié de la longueur de ladite tablette, en position centrée.

7. Véhicule automobile, **caractérisé en ce qu'**il comprend une tablette arrière selon l'une quelconque des revendications 1 à 6, ladite tablette présentant une surface plane mobile et/ou amovible, pouvant venir recouvrir une zone de coffre à l'arrière dudit véhicule, et comprenant au moins un store à enrouleur présentant une toile souple (21 ; 33) susceptible d'être déployée dans le plan de ladite tablette, pour recouvrir une ouverture (31) ménagée dans un élément rigide et plan de ladite tablette, et d'être repliée pour permettre un accès audit coffre sans déplacer ladite tablette.

8. Véhicule automobile selon la revendication 7, **caractérisé en ce qu**'il comprend un hayon arrière (11) et une vitre de custode (12) mobile indépendamment dudit hayon arrière (11), et en ce que ledit store (21 ; 33) permet l'accès au coffre du véhicule, lorsque ladite vitre de custode (12) est ouverte.

## Claims

1. Rear parcel shelf for a motor vehicle, having a mobile and/or removable planar surface, being able to cover a boot area at the rear of said vehicle,
**characterised in that** it comprises at least one roller blind having a flexible fabric (21; 33) capable of being deployed in the plane of said parcel shelf, to cover an aperture (31) made in a rigid and planar element (13; 32) of said parcel shelf, and capable of being retracted to allow access to said boot without displacing said parcel shelf.

2. Rear parcel shelf according to Claim 1, **characterised in that** said rigid element (13; 32) is substantially U-shaped, the internal space of said U-shape being able to be closed by said blind (21; 33) and the upper part of said U-shape corresponding to the area of said parcel shelf coming into contact with a rear window or a tailgate of said vehicle.

3. Rear parcel shelf according to any one of Claims 1 and 2, **characterised in that** said rigid element (13; 32) carries guide rails for a draw bar for said fabric.

4. Rear parcel shelf according to Claim 3, **characterised in that** said guide rails are formed in the main body of said rigid element (13; 32).

5. Rear parcel shelf according to any one of Claims 1 to 4, **characterised in that** said aperture (31) corresponds to a surface of at least 80% of the surface of said parcel shelf.

6. Rear parcel shelf according to any one of Claims 1 to 4, **characterised in that** said aperture (31) extends substantially over half the width of said parcel shelf, corresponding to the rear of said vehicle, and over half the length of said parcel shelf, in the centered position.

7. Motor vehicle **characterised in that** it comprises a rear parcel shelf according to any one of Claims 1 to 6, said parcel shelf having a mobile and/or removable planar surface, being able to cover a boot area at the rear of said vehicle and comprising at least one roller blind having a flexible fabric (21; 33) capable of being deployed in the plane of said parcel shelf, to cover an aperture (31) made in a rigid and planar element of said parcel shelf, and capable of being retracted to allow access to said boot without displacing said parcel shelf.

8. Motor vehicle according to Claim 7, **characterised in that** it comprises a rear tailgate (11) and a rear quarter panel window (12) which may be moved independently of said rear tailgate (11) and **in that** said blind (21; 33) allows access to the boot of the vehicle when said rear quarter panel window (12) is open.

## Patentansprüche

1. Heckablage für Personenkraftwagen, die eine bewegliche und/oder abnehmbare ebene Fläche aufweist, die einen Kofferraumbereich im Heckteil des besagten Fahrzeuges abdecken kann,
**dadurch gekennzeichnet, dass** sie mindestens ein Rollo umfasst, welches eine biegsame Stoffbahn (21; 33) aufweist, die sich in der Ebene der besagten Ablage entfaltet lässt, um eine in einem starren und ebenen Element (13; 32) der besagten Ablage vorgesehene Öffnung (31) zu bedecken, und sich zusammenfalten lässt, um den Zugang zum besagten Kofferraum zu ermöglichen, wobei ein Verschieben der Ablage zu diesem Zweck nicht erforderlich ist.

2. Heckablage nach Anspruch 1,
**dadurch gekennzeichnet, dass** das starre Element (13; 32) in etwa U-förmig ist, wobei der innere Raum des besagten U von dem Rollo (21; 33) verschlossen werden kann und der obere Teil dieses U dem Bereich der Ablage entspricht, der mit einem Heckfenster oder einer Hecktür des Fahrzeuges in Berührung kommt.

3. Heckablage nach einem der Ansprüche 1 oder 2,
**dadurch gekennzeichnet, dass** das starre Element (13; 32) Führungsschienen für eine Zugstange der besagten Stoffbahn trägt.

4. Heckablage nach Anspruch 3,
**dadurch gekennzeichnet, dass** die besagten Führungsschienen in dem Körper des starren Elementes (13; 32) ausgebildet sind.

5. Heckablage nach einem der Ansprüche 1 bis 4,
**dadurch gekennzeichnet, dass** die Öffnung (31) mindestens 80% der Fläche der Ablage einnimmt.

6. Heckablage nach einem der Ansprüche 1 bis 4,
**dadurch gekennzeichnet, dass** die Öffnung (31) sich in etwa über eine dem Heck des Fahrzeuges entsprechende Hälfte der Breite der Ablage sowie zentriert über eine Hälfte der Länge der besagten Ablage erstreckt.

7. Personenkraftwagen,
**dadurch gekennzeichnet, dass** er eine Heckablage nach einem der Ansprüche 1 bis 6 aufweist, wobei die besagte Ablage eine bewegliche und/oder abnehmbare ebene Fläche aufweist, die einen Kofferraumbereich im Heck des besagten Fahrzeuges abdecken kann und mindestens ein Rollo umfasst, welches eine biegsame Stoffbahn (21; 33) aufweist, die sich in der Ebene der besagten Ablage entfalten lässt, um eine in einem starren und ebenen Element der besagten Ablage vorgesehenen Öffnung (31) zu bedecken und sich zusammenfalten lässt, um den Zugang zum Kofferraum zu ermöglichen, wobei ein Verschieben der Ablage zu diesem Zweck nicht erforderlich ist.

8. Personenkraftwagen nach Anspruch 7,
**dadurch gekennzeichnet, dass** er eine Heckklappe (11) und eine hintere Glasscheibe (12) aufweist, die unabhängig von der Heckklappe (11) beweglich ist, und **dadurch**, dass das besagte Rollo (21; 33) den Zugang zum Kofferraum des Fahrzeugs ermöglicht, wenn die hintere Glasscheibe (12) geöffnet ist.
